# EUROPEAN PATENT SPECIFICATION

(11) **EP 3 614 340 B1**
(45) Date of publication and mention of the grant of the patent: **27.09.2023**
(21) Application number: 19190422.6
(22) Date of filing: 07.08.2019
(51) Int. Cl.: G06T 15/04, G06T 15/20, G06V 20/64, G06V 40/16

(54) **METHODS AND DEVICES FOR ACQUIRING 3D FACE, AND COMPUTER READABLE STORAGE MEDIA**
VERFAHREN UND VORRICHTUNGEN ZUR ERFASSUNG EINES 3D-GESICHTS UND COMPUTERLESBARE SPEICHERMEDIEN
PROCÉDÉS ET DISPOSITIFS D'ACQUISITION DE VISAGE 3D ET SUPPORT D'ENREGISTREMENT LISIBLE PAR ORDINATEUR

(30) Priority: 16.08.2018 CN 201810934565
(43) Date of publication of application: 26.02.2020
(73) Proprietor: GUANGDONG OPPO MOBILE TELECOMMUNICATIONS CORP., LTD., Wusha, Chang'an Dongguan, Guangdong 523860 (CN)
(72) Inventor: OUYANG, Dan, Dongguan, Guangdong 523860 (CN)
(74) Representative: Manitz Finsterwald Patent- und Rechtsanwaltspartnerschaft mbB

(56) References cited:
- EP-A1- 2 993 614
- US-A1- 2004 175 039
- US-A1- 2004 190 775
- US-A1- 2014 160 123
- US-B1- 7 103 211
- WING HO LEUNG ET AL: "Realistic video avatar", MULTIMEDIA AND EXPO, 2000. ICME 2000. 2000 IEEE INTERNATIONAL CONFEREN CE ON NEW YORK, NY, USA 30 JULY-2 AUG. 2000, PISCATAWAY, NJ, USA,IEEE, US, vol. 2, 30 July 2000 (2000-07-30), pages 631-634, XP010513092, ISBN: 978-0-7803-6536-0

## Description

### TECHNICAL FIELD

The present disclosure relates to a field of portrait processing technologies, and more particularly to a method and a device for acquiring a 3D face, and a computer readable storage medium.

### BACKGROUND

As computer technologies progress, face-based image processing technologies develop from two-dimension (2D) to three-dimension (3D). 3D image processing has got wide attention due to the sense of reality. 3D face rendering is applied in many smart terminal devices to generate realistic 3D faces.

In the related art, the whole process of generating and rendering a 3D face model has complicated operations, a large amount of calculation, and a large pressure of calculation. EP 2 993 614 A1 relates to a method and apparatus for facial recognition. The facial recognition apparatus configured to obtain a two-dimensional (2D) input image including a face region of a user, detect a facial feature point from the 2D input image, adjust a pose of a stored three-dimensional (3D) facial model based on the detected facial feature point, generate a 2D projection image from the adjusted 3D facial model, perform facial recognition based on the face region in the 2D input image and a face region in the 2D projection image, and output a result of the facial recognition.

### SUMMARY

The invention is defined by a method according to claim 1, a device according to claim 6, and a computer readable storage medium according to claim 11. Further embodiments are defined by the dependent claims.

Additional aspects and advantages of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and/or advantages of embodiments of the present disclosure will become apparent and more readily appreciated from the following descriptions made with reference to the accompanying drawings, in which:
FIG. 1 illustrates a flowchart of a method for acquiring a 3D face according to embodiments of the present disclosure.
FIG. 2 illustrates a flowchart of a method for acquiring a 3D face according to embodiments of the present disclosure.
FIG. 3 illustrates a flowchart of a method for acquiring a 3D face according to embodiments of the present disclosure.
FIG. 4 illustrates a flowchart of acquiring depth information according to an embodiment of the present disclosure.
FIG. 5 illustrates a schematic diagram of a depth image acquisition component according to an embodiment of the present disclosure.
FIG. 6 illustrates a flowchart of a method for acquiring a 3D face according to embodiments of the present disclosure.
FIG. 7 illustrates a flowchart of a method for acquiring a 3D face according to embodiments of the present disclosure.
FIG. 8 illustrates a flowchart of a method for acquiring a 3D face according to embodiments of the present disclosure.
FIG. 9 illustrates a block diagram of a device for acquiring a 3D face according to an embodiment of the present disclosure.
FIG. 10 illustrates a block diagram of a device for acquiring a 3D face according to an embodiment of the present disclosure.
FIG. 11 illustrates a block diagram of a device for acquiring a 3D face according to an embodiment of the present disclosure.
FIG. 12 illustrates a block diagram of a device for acquiring a 3D face according to an embodiment of the present disclosure.
FIG. 13 illustrates a block diagram of a device for acquiring a 3D face according to an embodiment of the present disclosure.
FIG. 14 illustrates a schematic diagram of an electronic device according to an embodiment of the present disclosure.
FIG. 15 illustrates a schematic diagram of an image processing circuit according to an embodiment of the present disclosure.
FIG. 16 illustrates a schematic diagram of an image processing circuit as a possible implementation.

### DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

A method and a device for acquiring a 3D face according to an embodiment of the present disclosure will be described below with reference to the drawings. The method may be applicable to computer devices having an apparatus for acquiring depth information and color information. The apparatus for acquiring depth information and color information (i.e., 2D information) may be a dual-camera system or the like. The computer devices may be hardware devices having various operating systems, touch screens, and/or display screens, such as mobile phones, tablet computers, personal digital assistants, wearable devices.

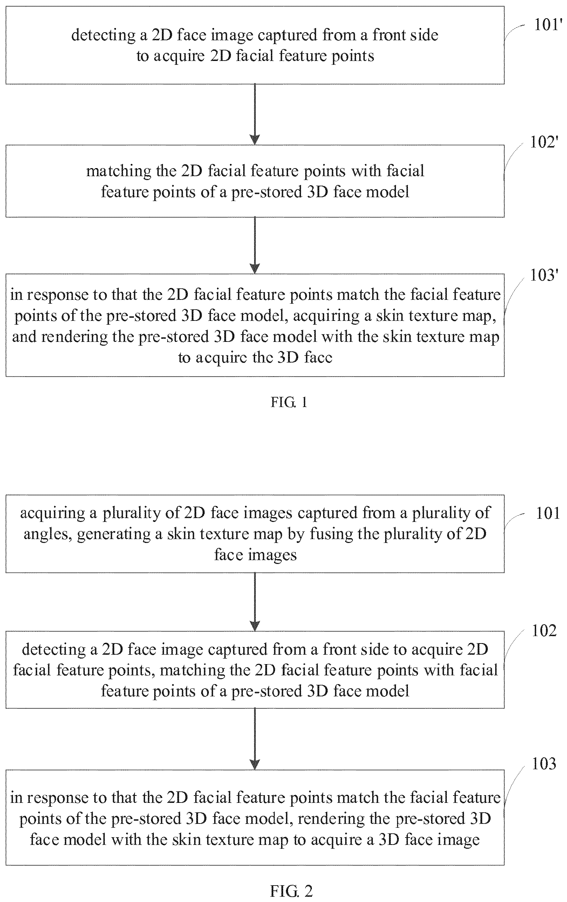

FIG. 1 illustrates a flowchart of a method for acquiring a 3D face according to embodiments of the present disclosure. As illustrated in FIG. 1, the method includes acts in the following blocks.

At block 101', a 2D face image captured from a front side is detected to acquire 2D facial feature points.

At block 102', the 2D facial feature points are matched with facial feature points of a pre-stored 3D face model.

At block 103', in response to that the 2D facial feature points match the facial feature points of the pre-stored 3D face model, a skin texture map is acquired, and the pre-stored 3D face model is rendered with the skin texture map to acquire the 3D face.

FIG. 2 illustrates a flowchart of a method for acquiring a 3D face according to embodiments of the present disclosure. As illustrated in FIG. 2, the method includes acts in the following blocks.

At block 101, a plurality of 2D face images acquired from a plurality of angles is acquired, and a skin texture map is generated by fusing the plurality of 2D face images.

The skin texture map corresponds to surface skin of a user's face. The skin texture and the 3D face model are merged, such that a 3D face for the user may be constructed realistically. In detail, the plurality of 2D face images from the plurality of angles is acquired to generate the skin texture map covering the 3D face model.

Since the skin texture map covers the entire 3D face model, on the one hand, in order to make the plurality of 2D face images from the plurality of angles may be successfully stitched together, the 2D face images that are stitched with each other may have an overlapping area to facilitate alignment and connection; on the other hand, when the overlapping area between the 2D face images that are stitched with each other, is larger, repeated information is increased, and the amount of calculation is increased. Therefore, in the embodiments of the present disclosure, the plurality of angles for capturing the plurality of 2D face images is required to be controlled. In other words, a size of the overlapping area between two 2D face images that are stitched with each other is controlled to be within a proper range.

The 2D face image may be a photo or the like. As a possible implementation manner, a hardware apparatus for acquiring 2D face information may be a visible-light RGB (Red-Green-Blue) image sensor. The visible-light RGB image sensor in the computer device may acquire the 2D face image. In detail, the visible-light RGB image sensor may include a visible-light camera. The visible-light camera may capture visible light reflected by an imaging object to acquire a 2D face image corresponding to the imaging object.

At block 102, a 2D face image captured from a front side is detected to acquire 2D facial feature points, and the 2D facial feature points are matched with facial feature points of a pre-stored 3D face model.

The 3D face model is actually constructed by key points and a triangular network formed by connecting the key points. The key points corresponding to portions having main influence on a shape of the entire 3D face model may be referred to as the facial feature points in the embodiments of the present disclosure. The facial feature points may distinguish different 3D face models, and thus correspond to key points of key portions representing differentiation of the human face, such as nose tip, nose wings, corner of eyes, corner of mouth, and peaks of eyebrows.

In the embodiments of the present disclosure, the 2D face image may be detected by image recognition technologies to acquire the 2D facial feature points, such as 2D facial feature points of nose tip, nose wings, corner of eyes, corner of mouth, and peaks of eyebrows. Based distances and positional relationship among the facial feature points, the matching is performed on the pre-stored 3D facial feature points. When the distances and positional relationship among the 2D facial feature points are matched with the distances and positional relationship among the pre-stored 3D facial feature points, the 3D facial feature points are considered to be from the same user as the current 2D facial feature points.

In the embodiments of the present disclosure, the face image captured from the front side is selected from the plurality of 2D face images captured from the plurality of angles. Or in the embodiments of the present disclosure, the face image captured from the front side is captured in real time.

At block 103, in response to that the 2D facial feature points match the facial feature points of the pre-stored 3D face model, and the pre-stored 3D face model is rendered with the skin texture map to acquire the 3D face.

In the embodiments of the present disclosure, in order to improve the modeling efficiency, 3D face models of old users and registered users (usually the owner of the device and the relatives of the owner may use a rendering function of 3D face more often) are pre-stored. If the pre-stored 3D face model that has the facial feature points matching the 2D facial feature points exists, the pre-stored 3D face model is rendered with the skin texture map to acquire the 3D face. In other words, the position of the skin texture map relative to the 3D face model is given, and the skin texture map is attached to the 3D face model according to the corresponding position.

In an embodiment of the present disclosure, if the user uses the rendering function of 3D face or the like for the first time, the pre-stored 3D face model that has the facial feature points matching the 2D facial feature points does not exist. Under this case, a 3D face model is required to be constructed according to the current plurality of 2D face images in real time, in order to achieve rendering based on the 3D face model.

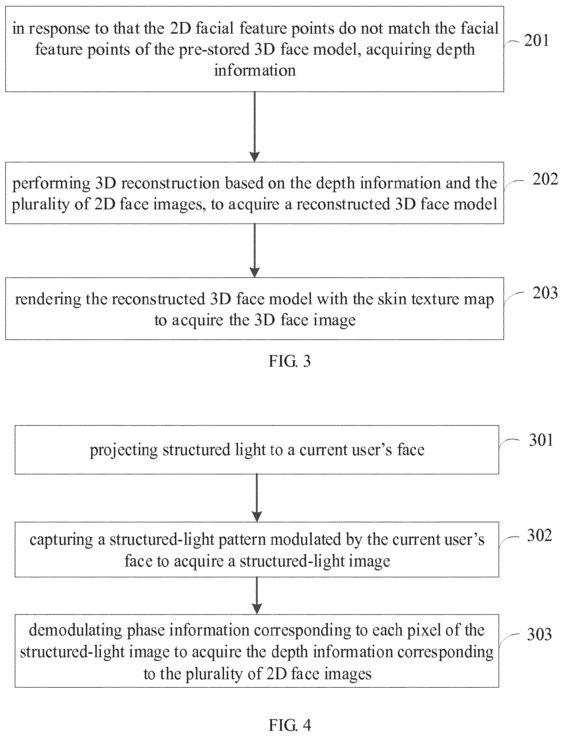

As illustrated in FIG. 3, based the embodiment of FIG. 2, the method further includes acts in the following blocks.

At block 201, in response to that the 2D facial feature points do not match the facial feature points of the pre-stored 3D face model, depth information is acquired.

At block 202, 3D reconstruction is performed based on the depth information and the plurality of 2D face images, to acquire a reconstructed 3D face model.

At block 203, the reconstructed 3D face model is rendered with the skin texture map to acquire the 3D face.

In detail, when the pre-stored 3D face model that has the facial feature points matching the 2D facial feature points does not exist, the depth information corresponding to the plurality of 2D facial images is acquired, so as to facilitate the 3D face reconstruction based on the depth information and the 2D image information, such that the 3D face model corresponding to the user's face is acquired.

As a possible implementation manner, the depth information may be acquired by using a structured-light sensor. In detail, as illustrated in FIG. 4, the manner of acquiring the depth information includes acts in the following blocks.

At block 301, structured light is projected to a current user's face.

At block 302, a structured-light pattern modulated by the current user's face is captured to acquire a structured-light image.

At block 303, phase information corresponding to each pixel of the structured-light image is demodulated to acquire the depth information corresponding to the plurality of 2D face images.

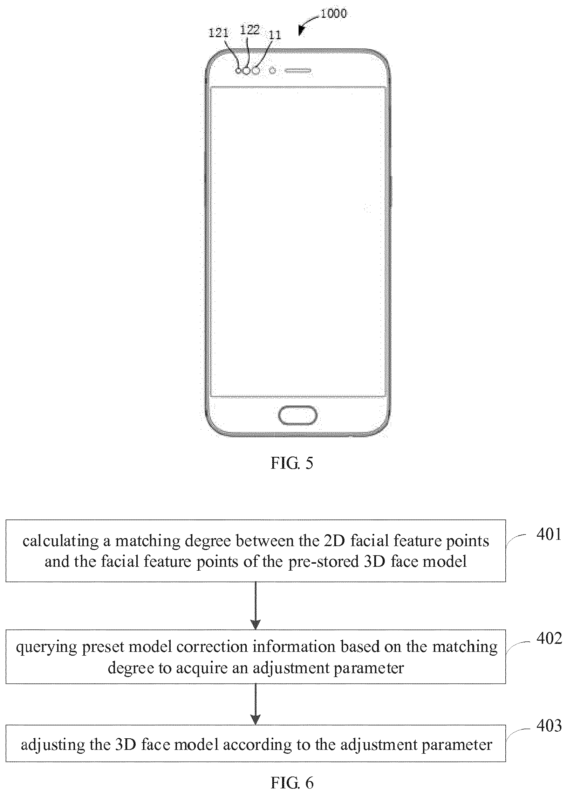

In this example, as illustrated in FIG. 5, when the computer device is a smartphone 1000, the depth image acquisition component 12 includes a structured-light projector 121 and a structured-light camera 122. The act at block 301 may be implemented by the structured-light projector 121. The acts at blocks 302 and 303 may be implemented by the structured-light camera 122.

In other words, the structured-light projector 121 is configured to project the structured light to the current user's face. The structured-light camera 122 is configured to, capture the structured-light pattern modulated by the current user's face to acquire the structured-light image, and demodulate the phase information corresponding to each pixel of the structured-light image to acquire the depth information.

In detail, after the structured-light projector 121 projects a certain pattern of structured light onto the current user's face, the structured-light pattern modulated by the current user's face is formed on the surface of the current user's face. The structured-light camera 122 captures the modulated structured-light pattern to acquire the structured-light image and demodulates the structured-light image to acquire the depth information. The pattern of structured light may be laser stripes, a Gray code, sine stripes, non-uniform speckles, or the like.

The structured-light camera 122 is further configured to, demodulate the phase information corresponding to each pixel in the structured-light image, convert the phase information into the depth information, and generate a depth image according to the depth information.

In detail, the phase information of the modulated structured light is changed compared to the phase information of the unmodulated structured light, and the structured light presented in the structured-light image has distortion. The changed phase information may represent the depth information of the object. Therefore, the structured-light camera 122 first demodulates the phase information corresponding to each pixel in the structured-light image, and then calculates the depth information based on the phase information.

Thus, the 3D reconstruction is performed according to the depth information and the 2D plurality of face images. The depth information and the 2D information are given to the relevant points, and thus the 3D face model is reconstructed. The reconstructed 3D face model may fully restore the face. Comparing to the 2D face model, the 3D face model further includes information, such as a solid angle of the facial features.

Depending on the application scenario, the method of the 3D reconstruction based on the depth information and the 2D face images to acquire the original 3D face model may include, but be not limited to, the followings.

As a possible implementation method, key points are recognized for each 2D face image to acquire positioning key points. For the 2D face images, relative positions of the positioning key points in the 3D space may be determined according to the depth information of the positioning key points and distances among the positioning key points on the 2D face images, including x-axis distances and y-axis distances in the 2D space. The adjacent positioning key points are connected according to the relative positions of the positioning key points in the 3D space, such that the 3D face model is generated. The key points are the facial feature points on the human face, which may include corner of eyes, nose tip, corner of mouth, and the like.

As another possible implementation manner, a plurality of 2D face images may be acquired from a plurality of angles, and face images with higher definition are selected from the plurality of 2D face images as the original data to position feature points. A feature positioning result is used to roughly estimate the face angle. According to the angle face and the face contour, a rough 3D deformation model of the face is established. The facial feature points are moved to the same scale as the 3D deformation model of the face through planning and zooming, and the coordinate information of the points corresponding to the facial feature points is extracted to form a sparse 3D deformation model of the face.

Furthermore, according to the rough estimate value of the face angle and the sparse 3D deformation model of the face, the particle swarm algorithm is used to iteratively perform the 3D face reconstruction to acquire the 3D geometric model of the face. After acquiring the 3D geometric model of the face, the method of texture posting is adopted to map the face texture information input in the 2D images to the 3D geometric model of the face to acquire a complete 3D face model.

Further, after the 3D face model is constructed, the face 3D face model and the skin texture map are rendered to acquire the 3D face.

In the actual execution processing, the pre-established 3D face model may only correspond to one facial expression of the user or a limited number of facial expressions of the user. Therefore, rendering based on the pre-stored 3D face model matching the current user may result in unsatisfied rendering effect. Therefore, the 3D face model in the embodiments of the present disclosure may also be adaptively adjusted.

As illustrated in FIG. 6, based on the embodiment of FIG. 1 or FIG. 2, the method further includes acts in the following blocks.

At block 401, a matching degree between the 2D facial feature points and the facial feature points of the pre-stored 3D face model.

At block 402, preset model correction information is queried based on the matching degree to acquire an adjustment parameter.

At block 403, the 3D face model is adjusted according to the adjustment parameter.

In detail, calculating the matching degree between the 2D facial feature points and the facial feature points of the pre-stored 3D face model, includes: calculating a coordinate difference value between the 2D facial feature points and the facial feature points of the pre-stored 3D face model. The preset model correction information is queried to acquire the adjustment parameter corresponding to the matching degree. The preset model correction information may include a change adjustment value of coordinate points of the facial feature points. The 3D face model is adjusted according to the adjustment parameter, thereby adjusting the 3D face model adaptive to the skin texture map to make the skin texture map attach more closely to the 3D face model, such that the generated 3D face model is more realistic.

In conclusion, with the rendering method based on the 3D face model provided in the embodiments of the present disclosure, the plurality of 2D face images acquired from the plurality of angles is acquired. The skin texture map is generated by fusing the plurality of 2D face images. The 2D face image acquired from the front side is detected to acquire the 2D facial feature points. The 2D facial feature points are matched with the one or more groups of pre-stored 3D facial feature points. If the target 3D facial feature points matching the 2D facial feature points are acquired from the one or more groups of pre-stored 3D facial feature points, the 3D face model corresponding to the target 3D facial feature points is rendered with the skin texture map to acquire the 3D face. Thereby, the 3D face is generated by rendering the existing 3D face model, thus the efficiency of generating the 3D face is improved.

Based on the above embodiments, in practical applications, the accuracy of generating the skin texture map by fusing the plurality of 2D face images varies the plurality of 2D face images. Therefore, if the rendering of the 3D is implemented according to the accuracy of generating the skin texture map by fusing the plurality of the 2D face images, the utilization of related resources is improved.

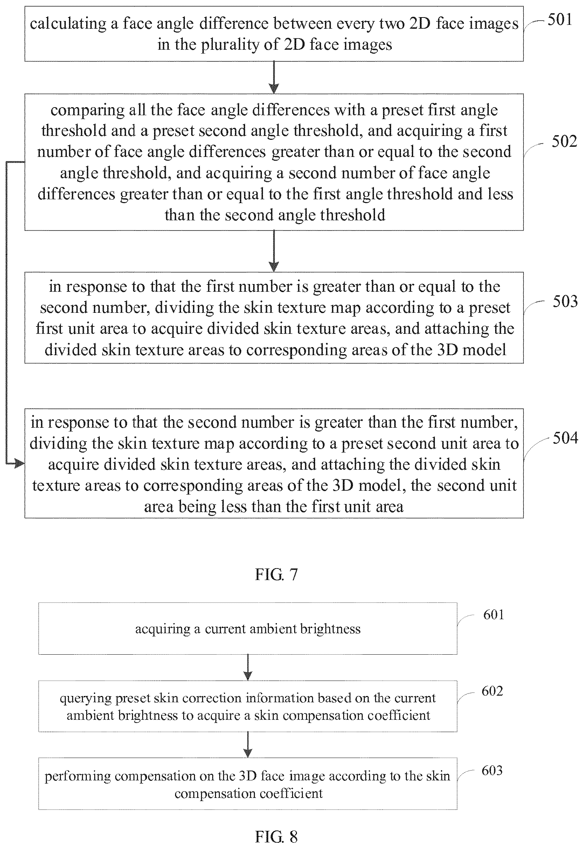

In detail, FIG. 7 illustrates a flowchart of a method for acquiring a 3D face according to embodiments of the present disclosure. As illustrated in FIG. 7, the pre-stored 3D face model or the reconstructed 3D face model (hereafter refers to the 3D face model) may be rendered with the skin texture map to acquire the 3D face, which may include acts in the following blocks.

At block 501, a face angle difference between every two 2D face images in the plurality of 2D face images is calculated.

It is understood that the larger the overlapping area between every two 2D face images, the smaller the face angle difference between every two 2D face images, and thus, the face angle difference between every two 2D face images is calculated according to the size of the overlapping area between every two 2D face images.

At block 502, all the face angle differences are compared with a preset first angle threshold and a preset second angle threshold, and a first number of face angle differences greater than or equal to the second angle threshold is acquired, and a second number of face angle differences greater than or equal to the first angle threshold and less than the second angle threshold is acquired .

The preset first angle threshold and the preset second angle threshold may be calibrated according to a large amount of experimental data. When the face angle difference is greater than the second angle threshold, it indicates that the overlapping area of the captured two 2D face images is small, and the generated skin texture area has low precision. When the face angle difference is greater than or equal to the first angle threshold and less than the second angle threshold, it indicates that the overlapping area of the captured two 2D face images are large, and the generated skin texture area has high precision.

In detail, all the face angle differences are compared with the preset first angle threshold and the preset second angle threshold, the first number of the face angle differences greater than or equal to the second angle threshold may be acquired, and the second number of the face angle differences greater than or equal to the first angle threshold and less than the second angle threshold may be acquired, such that the accuracy distribution of the skin texture map may be determined.

At block 503, in response to that the first number is greater than or equal to the second number, the skin texture map is divided according to a preset first unit area to acquire divided skin texture areas, and the divided skin texture areas are attached to corresponding areas of the 3D face model.

In detail, if the first number is greater than or equal to the second number, it indicates that the accuracy distribution of the skin texture map is low overall precision, and thus, the skin texture map is divided according to the preset first unit area, the divided skin texture areas are attached to the corresponding areas of the 3D face model. The first unit area is a large unit area. Since the accuracy distribution of the skin texture map is low overall precision, it is easy to find the corresponding points of the skin texture map and the 3D face model, according to the larger unit area, such that the rendering success rate is improved.

At block 504, in response to that the second number is greater than the first number, the skin texture map is divided according to a preset second unit area to acquire divided skin texture areas, and the divided skin texture areas are attached to corresponding areas of the 3D face model. The second unit area is less than the first unit area.

In detail, if the second number is greater than the first number, it indicates that the precision distribution of the skin texture map is high overall precision, and thus, the skin texture map is divided according to the preset second unit area, and the divided skin texture areas are attached to the corresponding areas of the 3D face model. The second unit area is a small unit area. Since the accuracy distribution of the skin texture map is high overall precision, it is easy to find the corresponding points of the skin texture map and the 3D face model, according to the small unit area, thereby improving the rendering success rate and the rendering effect.

In an embodiment of the present disclosure, in order to further improve the rendering effect, and the connection tightness of the current 2D face image and the rendered 3D face model, current environmental parameters reflected on the 2D face image such as ambient brightness may also be reflected in the 3D face model.

In an embodiment of the present disclosure, as illustrated in FIG. 8, after the act at block 103 or block 103', the method further includes acts in the following blocks.

At block 601, a current ambient brightness is acquired.

The current ambient brightness may be determined according to pixel brightness of the current 2D face image, or using a relevant sensor on the terminal device.

At block 602, preset skin correction information is queried based on the current ambient brightness to acquire a skin compensation coefficient.

The ambient brightness has an effect on the skin brightness and the skin color. For example, the face skin in a dark environment has a brighter and lighter skin zero when compared to the face skin in a high brightness environment. The ambient brightness also causes a shadow distribution on the face. Therefore, the skin is corrected according to the ambient brightness, and the rendering validity may be improved.

In detail, the skin correction information is preset. The correction information includes a correspondence between the ambient brightness and the color and brightness of the skin. Further, the preset skin correction information is queried, and the skin compensation coefficient corresponding to the skin color and the ambient brightness information is acquired from the preset skin correction information. The compensation coefficient is employed to control the skin color. In order to embody the stereoscopic effect, the skin compensation coefficients corresponding to different face regions may be different.

At block 603, compensation is performed on the 3D face according to the skin compensation coefficient.

In detail, the compensation of the 3D face is performed on the rendered 3D face according to the skin compensation coefficient, so that the rendered image reflects the true distribution of the current ambient brightness on the face.

In conclusion, the method provided in the embodiments of the present disclosure may compensate the matched skin rendering according to the brightness of the scene, so that the rendered 3D face is echoed with the brightness of the scene, thereby improving the authenticity of the rendering process.

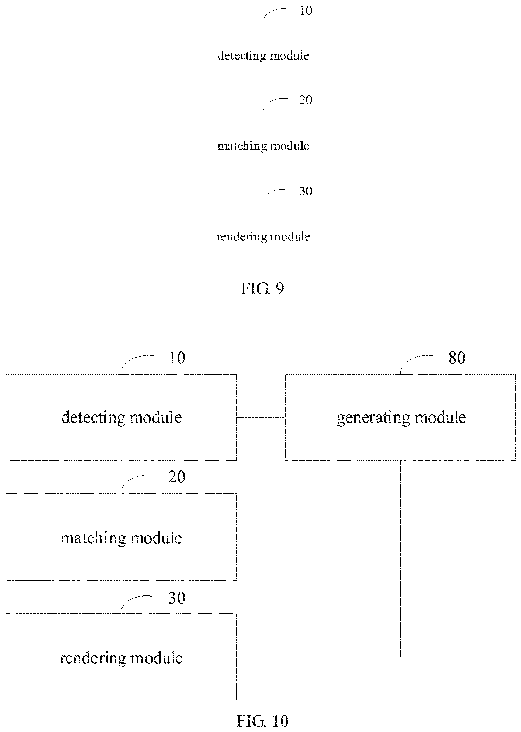

In order to implement the above embodiment, the present disclosure also provides a device for acquiring a 3D face. FIG. 9 illustrates a block diagram of a device for acquiring a 3D face according to an embodiment of the present disclosure. As illustrated in FIG. 9, the device includes: a detecting module 10, a matching module 20, and a rendering module 30.

The detecting module 10 is configured to detect a 2D face image captured from a front side to acquire 2D facial feature points.

The matching module 20 is configured to match the 2D facial feature points with facial feature points of a pre-stored 3D face model.

The rendering module 30 is configured to, in response to that the 2D facial feature points match the facial feature points of the pre-stored 3D face model, acquire a skin texture map, and render the pre-stored 3D face model with the skin texture map to acquire the 3D face.

FIG. 10 illustrates a block diagram of a device for acquiring a 3D face according to an embodiment of the present disclosure. As illustrated in FIG. 10, the device includes: a detecting module 10, a matching module 20, a rendering module 30, and a generating module 80.

The detecting module 10, the matching module 20, and the rendering module 30 may refer to the embodiment of FIG. 9.

The generating module 80 is configured to acquire a plurality of 2D face images captured from a plurality of angles; and generate the skin texture map by fusing the plurality of 2D face images.

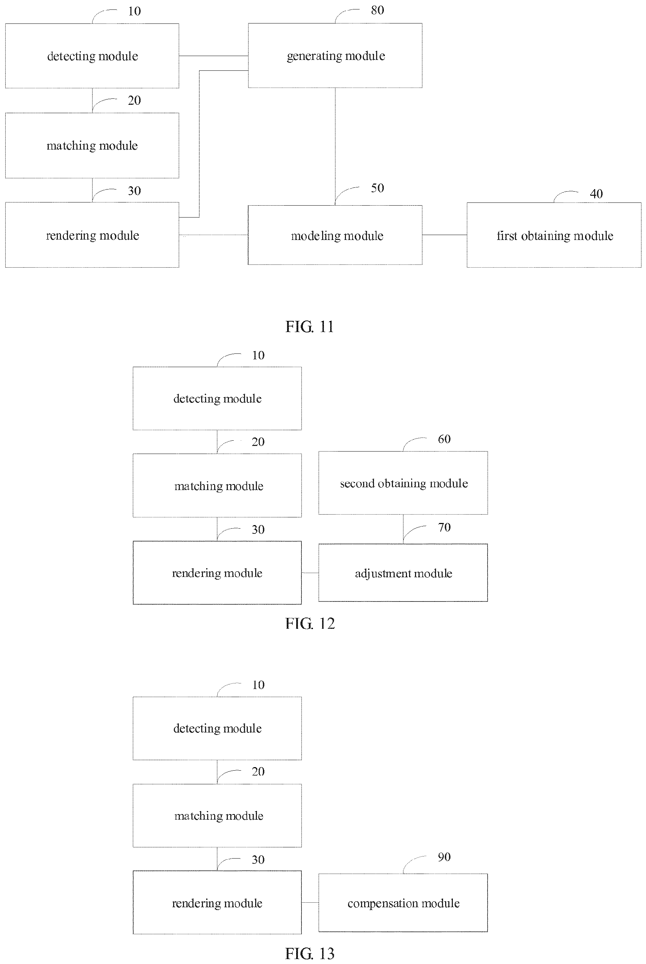

In an embodiment of the present disclosure, as illustrated in FIG. 11, based on the description as illustrated in FIG. 10, the device further includes a first acquiring module 40 and a modeling module 50.

The first acquiring module 40 is configured to acquire depth information, in response to that the 2D facial feature points do not match the facial feature points of the pre-stored 3D face model.

The modeling module 50 is configured to perform 3D reconstruction based on the depth information and the plurality of 2D face images to acquire a reconstructed 3D face model.

The rendering module 30 is further configured to render the reconstructed 3D face model with the skin texture map to acquire the 3D face.

It should be noted that the above explanation of the method in the embodiment is also applicable to the device, and details are not described herein again.

In conclusion, with the rendering device based on the 3D face model provided in the embodiments of the present disclosure, the plurality of 2D face images captured from the plurality of angles is acquired. The skin texture map is generated by fusing the plurality of 2D face images. The 2D face image acquired from the front side is detected to acquire the 2D facial feature points. The 2D facial feature points are matched with the one or more groups of pre-stored 3D facial feature points. If the target 3D facial feature points matching the 2D facial feature points are acquired from the one or more groups of pre-stored 3D facial feature points, the 3D face model corresponding to the target 3D facial feature points is rendered with the skin texture map to acquire the 3D face. Thereby, the 3D face is generated by rendering the existing 3D face model, thus the efficiency of generating the 3D face is improved.

In an embodiment of the present application, as illustrated in FIG. 12, based on the description as illustrated in FIG. 9, the device further includes a second acquiring module 60 and an adjustment module 70.

The second acquiring module 60 is configured to calculate a matching degree between the 2D facial feature points and the facial feature points of the pre-stored 3D face model, and query preset model correction information based on the matching degree to acquire an adjustment parameter.

The adjustment module 70 is configured to adjust the 3D face model according to the adjustment parameter.

It should be noted that the above explanation of the method of the embodiment is also applicable to the device of the embodiment, and details are not described herein again.

In conclusion, the rendering device based on the 3D face model provided in the embodiments of the present disclosure may compensate the matched skin rendering according to the brightness of the scene, so that the rendered 3D face is echoed with the brightness of the scene, thereby improving the authenticity of the rendering process.

In an embodiment, the rending module 30 is configured to: calculate a face angle difference between every two 2D face images in the plurality of 2D face images; compare all the face angle differences with a preset first angle threshold and a preset second angle threshold, acquire a first number of face angle differences greater than or equal to the second angle threshold, and acquire a second number of face angle differences greater than or equal to the first angle threshold and less than the second angle threshold; in response to that the first number is greater than or equal to the second number, divide the skin texture map according to a preset first unit area to acquire divided skin texture areas, and attach the divided skin texture areas to corresponding areas of the 3D face model; and in response to that the second number is greater than the first number, divide the skin texture map according to a preset second unit area to acquire divided skin texture areas, and attach the divided skin texture areas to corresponding areas of the 3D face model, the second unit area being less than the first unit area.

In an embodiment, as illustrated in FIG. 13, based on the description as illustrated in FIG. 9, the device further includes a compensation module 90.

The compensation module 90 is configured to acquire a current ambient brightness; query preset skin correction information based on the current ambient brightness to acquire a skin compensation coefficient; and perform compensation on the 3D face according to the skin compensation coefficient.

It should be noted that the above explanation of the method of the embodiment is also applicable to the device of the embodiment, and details are not described herein again.

In order to implement the above embodiments, the present disclosure further provides a computer readable storage medium having a computer program stored thereon. When the computer program is executed by a processor, the rendering method based on the 3D face model as described in the above embodiments is implemented.

In order to implement the above embodiments, the present disclosure also provides an electronic device.

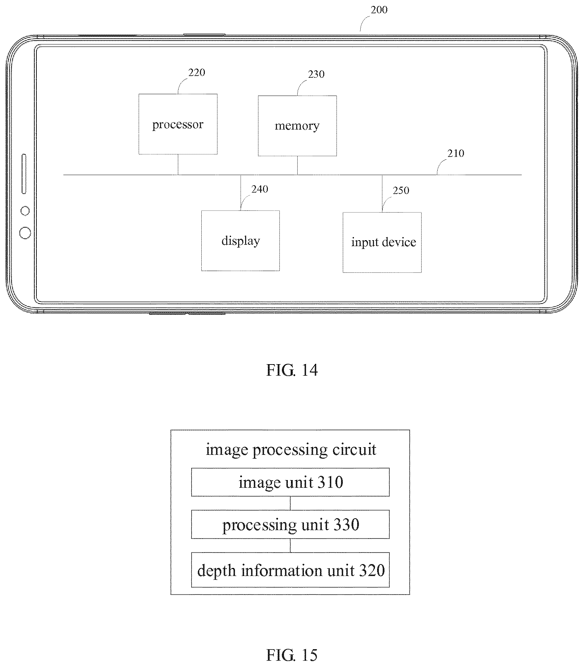

FIG. 14 is a schematic diagram of an electronic device according to an embodiment of the present disclosure. The electronic device 200 includes a processor 220, a memory 230, a display 240, and an input device 250 that are coupled by a system bus 210. The memory 230 of the electronic device 200 stores an operating system and computer readable instructions. The computer readable instructions are executable by the processor 220 to implement the rendering method based on the 3D face model provided in the embodiments of the present disclosure. The processor 220 is configured to provide computing and control capabilities to support the operation of the entire electronic device 200. The display 240 of the electronic device 200 may be a liquid crystal display or an electronic ink display or the like. The input device 250 may be a touch layer covered on the display 240, or may be a button, a trackball or a touchpad disposed on the housing of the electronic device 200, or an external keyboard, a trackpad or a mouse. The electronic device 200 may be a mobile phone, a tablet computer, a notebook computer, a personal digital assistant, or a wearable device (e.g., a smart bracelet, a smart watch, a smart helmet, smart glasses).

It will be understood by those skilled in the art that the structure illustrated in FIG. 14 is only a schematic diagram of a portion of the structure related to the solution of the present disclosure, and does not constitute a limitation of the electronic device 200 to which the solution of the present disclosure is applied. The specific electronic device 200 may include more or fewer components than illustrated in the figures, or some combined components, or have different component arrangement.

In order to implement the above embodiments, the present disclosure further provides an image processing circuit. The image processing circuit includes an image unit 310, a depth information unit 320, and a processing unit 330 as illustrated in FIG. 15.

The image unit 310 is configured to acquire a plurality of two-dimensional (2D) face images captured from a plurality of angles, and generate a skin texture map by fusing the plurality of 2D face images.

The depth information unit 320 is configured to output depth information corresponding to an original 2D face image upon preliminary registration.

The processing unit 330 is electrically coupled to the image unit and the depth information unit, and is configured to, detect a 2D face image captured from a front side to acquire 2D facial feature points, and match the 2D facial feature points with one or more groups of pre-stored 3D facial feature points, and in response to that target 3D facial feature points matching the 2D facial feature points are acquired from the one or more groups of pre-stored 3D facial feature points, render a 3D face model corresponding to the target 3D facial feature points with the skin texture map to acquire a 3D face.

In the embodiments of the present disclosure, the image unit 310 may include: an image sensor 311 and an image signal processing (ISP) processor 312 that are coupled electrically.

The image sensor 311 is configured to output 2D image data to generate a skin texture map by fusing the 2D image data.

The ISP processor 312 is configured to output the skin texture map generated by fusion according to the 2D image data.

In the embodiments of the present disclosure, the original image data captured by the image sensor 311 is first processed by the ISP processor 312, which analyzes the original image data to capture image statistics information that may be used to determine one or more control parameters of the image sensor 311, including face images in YUV (Luma and Chroma) format or RGB format. The image sensor 311 may include a color filter array (such as a Bayer filter) and corresponding photosensitive units, and the image sensor 311 may acquire light intensity and wavelength information captured by each photosensitive unit and provide a set of original image data that may be processed by the ISP processor 312. After processing the original image data, the ISP processor 312 obtains a face image in the YUV format or the RGB format and sends it to the processing unit 330, after a skin texture map is generated by fusion.

The ISP processor 312 may process the original image data pixel by pixel in a plurality of formats when processing the original image data. For example, each image pixel may have a bit depth of 8, 10, 12, or 14 bits, and the ISP processor 312 may perform one or more image processing operations on the original image data, collect statistical information about the image data. The image processing operation may be performed with the same or different bit depth precision.

As a possible implementation manner, the depth information unit 320 includes an structured-light sensor 321 and a depth map generation chip 322 that are electrically coupled.

The structured-light sensor 321 is configured to generate an infrared speckle pattern.

The depth map generation chip 322 is configured to output depth information corresponding to the 2D face image according to the infrared speckle pattern.

In the embodiments of the present disclosure, the structured-light sensor 321 projects the speckle structure light toward the subject, and acquires the structured light reflected by the subject, and acquire an infrared speckle pattern according to the reflected structure light. The structured-light sensor 321 sends the infrared speckle pattern to the depth map generation chip 322, so that the depth map generation chip 322 determines the morphological change of the structured light according to the infrared speckle pattern, and then determines the depth of the subject and acquire a depth map. The depth map indicates the depth of each pixel in the infrared speckle pattern. The depth map generation chip 322 transmits the depth map to the processing unit 330.

As a possible implementation, the processing unit 330 includes: a CPU (Central Processing Unit) 331 and a GPU (Graphics Processing Unit) 332 that are electrically coupled.

The CPU 331 is configured to align the face image and the depth map according to the calibration data, and output the 3D face model according to the aligned face image and depth map.

The GPU 332 is configured to, if the user is already registered or has already used the device, acquire a 3D face model corresponding to the user, and render the 3D face model corresponding to the target 3D facial feature points and the skin texture map, to acquire the 3D face.

In the embodiments of the present disclosure, upon registration, the CPU 331 acquires a face image from the ISP processor 312, and acquires a depth map from the depth map generation chip 322, and aligns the face image with the depth map by combining the previously acquired calibration data, to determine the depth information corresponding to each pixel point in the face image. Further, the CPU 331 performs 3D reconstruction based on the depth information and the face image to acquire the 3D face model.

The CPU 331 transmits the 3D face model to the GPU 332 so that the GPU 332 executes the rendering method based on the 3D face model as described in the above embodiment according to the 3D face model, to acquire the 3D face.

Further, the image processing circuit may further include: a first display unit 341.

The first display unit 341 is electrically coupled to the processing unit 330 for displaying an adjustment control that displays an adjustment parameter corresponding to a matching degree between the target 3D facial feature points and the 2D facial feature points.

Further, the image processing circuit may further include: a second display unit 342.

The second display unit 342 is electrically coupled to the processing unit 340 for displaying the 3D face.

Optionally, the image processing circuit may further include: an encoder 350 and a memory 360.

In the embodiments of the present disclosure, the beautified face map processed by the GPU 332 may also be encoded by the encoder 350 and stored in the memory 360. The encoder 350 may be implemented by a coprocessor.

In an embodiment, there may be a plurality of the memory 360, or the memory 360 may be divided into a plurality of storage spaces. The image data processed by the GPU 312 may be stored in a dedicated memory, or a dedicated storage space, and may include DMA (Direct Memory Access) feature. The memory 360 may be configured to implement one or more frame buffers.

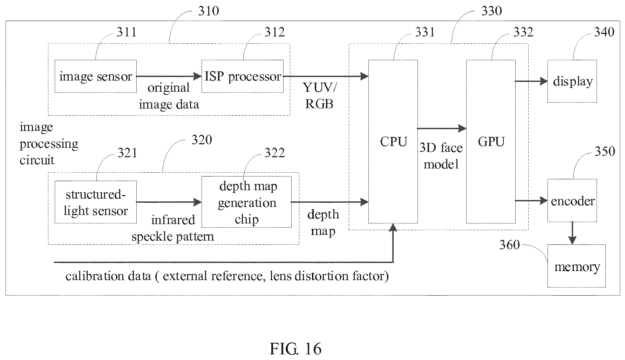

The above process will be described in detail below with reference to FIG. 16.

It should be noted that FIG. 16 is a schematic diagram of an image processing circuit as a possible implementation. For ease of explanation, only the various aspects related to the embodiments of the present disclosure are shown.

As illustrated in FIG. 16, the original image data captured by the image sensor 311 is first processed by the ISP processor 312, which analyzes the original image data to capture image statistics information that may be used to determine one or more control parameters of the image sensor 311, including face images in YUV format or RGB format. The image sensor 311 may include a color filter array (such as a Bayer filter) and corresponding photosensitive units, and the image sensor 311 may acquire light intensity and wavelength information captured by each photosensitive unit and provide a set of original image data that may be processed by the ISP processor 312. The ISP processor 312 processes the original image data to acquire a face image in the YUV format or the RGB format, and transmits the face image to the CPU 331.

The ISP processor 312 may process the original image data pixel by pixel in a plurality of formats when processing the original image data. For example, each image pixel may have a bit depth of 8, 10, 12, or 14 bits, and the ISP processor 312 may perform one or more image processing operations on the original image data, collect statistical information about the image data. The image processing operation may be performed with the same or different bit depth precision.

As illustrated in FIG. 16, the structured-light sensor 321 projects the speckle structure light toward the subject, and acquires the structured light reflected by the subject, and acquire an infrared speckle pattern according to the reflected structured light image. The structured-light sensor 321 sends the infrared speckle pattern to the depth map generation chip 322, so that the depth map generation chip 322 determines the morphological change of the structured light according to the infrared speckle pattern, and then determines the depth of the subject to acquire a depth map. The depth map indicates the depth of each pixel in the infrared speckle pattern. The depth map generation chip 322 transmits the depth map to the CPU 331.

The CPU 331 acquires a face image from the ISP processor 312, and acquires a depth map from the depth map generation chip 322, and aligns the face image with the depth map by combining the previously acquired calibration data, to determine the depth information corresponding to each pixel point in the face image. Further, the CPU 331 performs 3D reconstruction based on the depth information and the face image to acquire the 3D face model.

The CPU 331 transmits the 3D face model to the GPU 332, so that the GPU 332 performs the method described in the above embodiment according to the 3D face model, such that the face rendering processing is implemented to acquire the rendered face image. The rendered image processed by the GPU 332 may be displayed by the display 340 (including the first display unit 341 and the second display unit 351 described above), and/or encoded by the encoder 350 and stored in the memory 360. The encoder 350 is implemented by a coprocessor.

In an embodiment, there may be a plurality of the memory 360, or the memory 360 may be divided into a plurality of storage spaces. The image data processed by the GPU 312 may be stored in a dedicated memory, or a dedicated storage space, and may include DMA (Direct Memory Access,) feature. The memory 360 may be configured to implement one or more frame buffers.

For example, the following acts are implemented by using the processor 220 in FIG. 14 or using the imaging processing circuits (specifically, the CPU 331 and the GPU 332) in FIG. 16.

The CPU 331 acquires 2D face images and depth information corresponding to the face images; the CPU 331 performs 3D reconstruction according to the depth information and the face images to acquire a 3D face model; the GPU 332 acquires the 3D face model, renders the 3D face model corresponding to the target 3D facial feature points with the skin texture map to acquire a 3D face; and the GPU 332 may map the rendered 3D face to the 2D image.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. Without a contradiction, the different embodiments or examples and the features of the different embodiments or examples can be combined by those skilled in the art.

In addition, terms such as "first" and "second" are used herein for purposes of description and are not intended to indicate or imply relative importance or significance. Furthermore, the feature defined with "first" and "second" may comprise one or more this feature distinctly or implicitly. In the description of the present disclosure, "a plurality of" means two or more than two, unless specified otherwise.

The flow chart or any process or method described herein in other manners may represent a module, segment, or portion of code that comprises one or more executable instructions to implement the specified logic function(s) or that comprises one or more executable instructions of the steps of the progress. Although the flow chart shows a specific order of execution, it is understood that the order of execution may differ from that which is depicted. For example, the order of execution of two or more boxes may be scrambled relative to the order shown.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of acquiring the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to acquire the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc. Although explanatory embodiments have been shown and described, it would be appreciated by those skilled in the art that the above embodiments cannot be construed to limit the present disclosure, and changes, alternatives, and modifications can be made in the embodiments without departing from principles and scope of the present disclosure.

## Claims

1. A method for acquiring a three-dimensional (3D) face of a user, comprising:
acquiring (101) a plurality of two-dimensional (2D) face images of the user captured from a plurality of angles;
generating (101) a skin texture map by fusing the plurality of 2D face images;
detecting (102) a two-dimensional (2D) face image captured from a front side, by an image recognition technology, to acquire 2D facial feature points, wherein the face image captured from the front side is selected from the plurality of 2D face images captured from the plurality of angles;
being **characterized by**:
matching (102) the 2D facial feature points with facial feature points of a pre-stored 3D face model, wherein when distances and positional relationship among the 2D facial feature points are matched with distances and positional relationship among the facial feature points of the pre-stored 3D face model, the 2D facial feature points match the facial feature points of the pre-stored 3D face model;
in response (102) to that the 2D facial feature points match the facial feature points of the pre-stored 3D face model, rendering the pre-stored 3D face model with the skin texture map to acquire a new 3D face;
in response (201) to that the 2D facial feature points do not match the facial feature points of the pre-stored 3D face model, acquiring (201) depth information of the user's face; and
performing (202) 3D reconstruction based on the depth information and the plurality of 2D face images, to acquire a reconstructed 3D face model; and
rendering (203) the reconstructed 3D face model with the skin texture map to acquire the 3D face.

2. The method of claim 1, wherein the plurality of 2D face images from the plurality of angles are stitched together, and a size of an overlapping area between two 2D face images that are stitched with each other is within a proper range; and the stitched 2D face images are processed to generate the skin texture map.

3. The method of any one of claims 1 to 2, further comprising:
calculating (401) a matching degree between the 2D facial feature points and the facial feature points of the pre-stored 3D face model, comprising: calculating a coordinate difference value between the 2D facial feature points and the facial feature points of the pre-stored 3D face model;
querying (402) preset model correction information based on the matching degree to acquire an adjustment parameter, wherein the preset model correction information comprises: a change adjustment value of coordinate points of the facial feature points, and the change adjustment value of coordinate points of the facial feature points is taken as the adjustment parameter; and
adjusting (403) the pre-stored 3D face model according to the adjustment parameter, to adjust the 3D face model adaptive to the skin texture map to make the skin texture map attach more closely to the 3D face model, such that the generated 3D face model is more realistic.

4. The method of any one of claims 1 to 3, wherein the rendering the pre-stored 3D face model with the skin texture map to acquire the 3D face, comprises:
calculating (501) a face angle difference between every two 2D face images in the plurality of 2D face images;
comparing (502) all the face angle differences with a preset first angle threshold and a preset second angle threshold, and acquiring (502) a first number of face angle differences greater than or equal to the second angle threshold, and acquiring (502) a second number of face angle differences greater than or equal to the first angle threshold and less than the second angle threshold;
in response to that the first number is greater than or equal to the second number, segmenting (503) the skin texture map according to a preset first unit area to acquire segmented skin texture areas, and attaching (503) the segmented skin texture areas to corresponding areas of the 3D face model; and
in response to that the second number is greater than the first number, segmenting (504) the skin texture map according to a preset second unit area to acquire segmented skin texture areas, and attaching (504) the segmented skin texture areas to corresponding areas of the 3D face model, the second unit area being less than the first unit area.

5. The method of any one of claims 1 to 4, further comprising:
acquiring (601) a current ambient brightness;
querying (602) preset skin correction information based on the current ambient brightness to acquire a skin compensation coefficient; and
correcting (603) a skin on the 3D face according to the skin compensation coefficient.

6. A device for acquiring a three-dimensional (3D) face of a user, comprising:
a generating module (80) configured to, acquire a plurality of two-dimensional (2D) face images of the user captured from a plurality of angles and fuse the plurality of 2D face images to generate a skin texture map;
a detecting module (10) configured to, detect a two-dimensional (2D) face image captured from a front side to, by an image recognition technology, acquire 2D facial feature points, , wherein the face image captured from the front side is selected from the plurality of 2D face images captured from the plurality of angles;
being **characterized by**:
a matching module (20) configured to, match the 2D facial feature points with facial feature points of a pre-stored 3D face model, wherein when distances and positional relationship among the 2D facial feature points are matched with distances and positional relationship among the facial feature points of the pre-stored 3D face model, the 2D facial feature points match the facial feature points of the pre-stored 3D face model;
a rendering module (30) configured to, in response to that the 2D facial feature points match the facial feature points of the pre-stored 3D face model, render the pre-stored 3D face model with the skin texture map to acquire a new 3D face;
a first acquiring module (40), configured to, in response to that the 2D facial feature points do not match the facial feature points of the pre-stored 3D face model, acquire depth information of the user's face;
a modeling module (50) configured to, perform 3D reconstruction based on the depth information and the plurality of 2D face images, to acquire a reconstructed 3D face model; and
wherein the rendering module (30) is further configured to render the reconstructed 3D face model with the skin texture map to acquire the 3D face.

7. The device of claim 6, wherein the plurality of 2D face images from the plurality of angles are stitched together, and a size of an overlapping area between two 2D face images that are stitched with each other is within a proper range; and the stitched 2D face images are processed to generate the skin texture map.

8. The device of any one of claims 6 to 7, further comprising:
a second acquiring module (60) configured to, calculate a matching degree between the 2D facial feature points and the facial feature points of the pre-stored 3D face model by calculating a coordinate difference value between the 2D facial feature points and the facial feature points of the pre-stored 3D face model, query preset model correction information based on the matching degree to acquire an adjustment parameter, wherein the preset model correction information comprises: a change adjustment value of coordinate points of the facial feature points, and the change adjustment value of coordinate points of the facial feature points is taken as the adjustment parameter; and
an adjustment module (70) configured to adjust the pre-stored 3D face model according to the adjustment parameter, to adjust the 3D face model adaptive to the skin texture map to make the skin texture map attach more closely to the 3D face model, such that the generated 3D face model is more realistic.

9. The device of any one of claims 6 to 8, wherein the rendering module (30) is configured to:
calculate a face angle difference between every two 2D face images in the plurality of 2D face images;
compare all the face angle differences with a preset first angle threshold and a preset second angle threshold, and acquire a first number of face angle differences greater than or equal to the second angle threshold, and acquire a second number of face angle differences greater than or equal to the first angle threshold and less than the second angle threshold;
in response to that the first number is greater than or equal to the second number, segment the skin texture map according to a preset first unit area to acquire segmented skin texture areas, and attach the segmented skin texture areas to corresponding areas of the 3D face model; and
in response to that the second number is greater than the first number, segment the skin texture map according to a preset second unit area to acquire segmented skin texture areas, and attach the segmented skin texture areas to corresponding areas of the 3D face model, the second unit area being less than the first unit area.

10. The device of any one of claims 6 to 9, further comprising:
a compensation module (90) configured to, acquire a current ambient brightness, query preset skin correction information based on the current ambient brightness to acquire a skin compensation coefficient, and correct a skin on the 3D face according to the skin compensation coefficient.

11. A computer readable storage medium having a computer program stored thereon, wherein the computer programs causes an electronic device to carry out the method for acquiring a three-dimensional (3D) face of any one of claim 1 to 5.

## Patentansprüche

1. Verfahren zur Erfassung eines dreidimensionalen (3D) Gesichts eines Benutzers, das Folgendes umfasst:
Erfassen (101) von mehreren zweidimensionalen (2D) Gesichtsbildern des Benutzers, aufgenommen aus mehreren Winkeln;
Erzeugen (101) einer Hauttexturkarte durch Fusionieren von 2D-Gesichtsbildern;
Detektieren (102), durch eine Bilderkennungstechnologie, eines zweidimensionalen (2D) Gesichtsbilds, aufgenommen von einer Vorderseite, zum Erfassen von 2D-Gesichtsmerkmalspunkten, wobei das von der Vorderseite aufgenommene Gesichtsbild aus den mehreren 2D-Gesichtsbildern, die aus den mehreren Winkeln aufgenommen werden, ausgewählt wird;
**gekennzeichnet durch**:
Abgleichen (102) der 2D-Gesichtsmerkmalspunkte mit Gesichtsmerkmalspunkten eines vorab gespeicherten 3D-Gesichtsmodells, wobei, wenn Abstände und Positionsbeziehungen unter den 2D-Gesichtsmerkmalspunkten mit Abständen und einer Positionsbeziehung unter den Gesichtsmerkmalspunkten des vorab gespeicherten 3D-Gesichtsmodells abgeglichen werden, die 2D-Gesichtsmerkmalspunkte mit den Gesichtsmerkmalspunkten des vorab gespeicherten 3D-Gesichtsmodells übereinstimmen;
in Reaktion (102) darauf, dass die 2D-Gesichtsmerkmalspunkte mit den Gesichtsmerkmalspunkten des vorab gespeicherten 3D-Gesichtsmodells übereinstimmen, Darstellen des vorab gespeicherten 3D-Gesichtsmodells mit der Hauttexturkarte zum Erfassen eines neuen 3D-Gesichts;
in Reaktion (201) darauf, dass die 2D-Gesichtsmerkmalspunkte nicht mit den Gesichtsmerkmalspunkten des vorab gespeicherten 3D-Gesichtsmodells übereinstimmen, Erfassen (201) von Tiefeninformationen des Gesichts des Benutzers; und
Durchführen (202) von 3D-Rekonstruktion basierend auf den Tiefeninformationen und den mehreren 2D-Gesichtsbildern, zum Erfassen eines rekonstruierten 3D-Gesichtsmodells; und
Darstellen (203) des rekonstruierten 3D-Gesichtsmodells mit der Hauttexturkarte zum Erfassen des 3D-Gesichts.

2. Verfahren nach Anspruch 1, wobei die mehreren 2D-Gesichtsbilder aus den mehreren Winkeln zusammengefügt werden, und wobei eine Größe eines Überlappungsbereichs zwischen zwei 2D-Gesichtsbildern, die miteinander zusammengefügt werden, innerhalb eines geeigneten Bereichs ist; und wobei die zusammengefügten 2D-Gesichtsbilder verarbeitet werden, um die Hauttexturkarte zu erzeugen.

3. Verfahren nach einem der Ansprüche 1 bis 2, das ferner Folgendes umfasst:
Berechnen (401) eines Übereinstimmungsgrads zwischen den 2D-Gesichtsmerkmalspunkten und den Gesichtsmerkmalspunkten des vorab gespeicherten 3D-Gesichtsmodells, Folgendes umfassend: Berechnen eines Koordinatendifferenzwerts zwischen den 2D-Gesichtsmerkmalspunkten und den Gesichtsmerkmalspunkten des vorab gespeicherten 3D-Gesichtsmodells;
Abfragen (402) von vorab festgelegten Modellkorrekturinformationen basierend auf dem Übereinstimmungsgrad zum Erfassen eines Anpassungsparameters, wobei die vorab festgelegten Modellkorrekturinformationen Folgendes umfassen: einen Änderungsanpassungswert von Koordinatenpunkten der Gesichtsmerkmalspunkte, und wobei der Änderungsanpassungswert von Koordinatenpunkten der Gesichtsmerkmalspunkte als der Anpassungsparameter genommen wird; und
Anpassen (403) des vorab gespeicherten 3D-Gesichtsmodells entsprechend dem Anpassungsparameter zum Anpassen des 3D-Gesichtsmodells, angepasst an die Hauttexturkarte, damit die Hauttexturkarte noch enger am 3D-Gesichtsmodell anhaftet, sodass das erzeugte 3D-Gesichtsmodell realistischer ist.

4. Verfahren nach einem der Ansprüche 1 bis 3, wobei das Darstellen des vorab gespeicherten 3D-Gesichtsmodells mit der Hauttexturkarte zum Erfassen des 3D-Gesichts Folgendes umfasst:
Berechnen (501) einer Gesichtswinkeldifferenz zwischen jeweils zwei 2D-Gesichtsbildern in den mehreren 2D-Gesichtsbildern;
Vergleichen (502) aller Gesichtswinkeldifferenzen mit einer vorab festgelegten ersten Winkelschwelle und einer vorab festgelegten zweiten Winkelschwelle, und Erfassen (502) einer ersten Anzahl von Gesichtswinkeldifferenzen, die größer als oder gleich der zweiten Winkelschwelle sind, und Erfassen (502) einer zweiten Anzahl von Gesichtswinkeldifferenzen, die größer als oder gleich einer ersten Winkelschwelle und kleiner als die zweite Winkelschwelle sind;
in Reaktion darauf, dass die erste Anzahl größer als oder gleich der zweiten Anzahl ist, Segmentieren (503) der Hauttexturkarte entsprechend einem vorab festgelegten ersten Einheitsbereich zum Erfassen von segmentierten Hauttexturbereichen und Anheften (503) der segmentierten Hauttexturbereiche an entsprechende Bereiche des 3D-Gesichtsmodells; und
in Reaktion darauf, dass die zweite Anzahl größer als die erste Anzahl ist, Segmentieren (504) der Hauttexturkarte entsprechend einem vorab festgelegten zweiten Einheitsbereich zum Erfassen von segmentierten Hauttexturbereichen und Anheften (504) der segmentierten Hauttexturbereiche an entsprechende Bereiche des 3D-Gesichtsmodells, wobei der zweite Einheitsbereich kleiner als der erste Einheitsbereich ist.

5. Verfahren nach einem der Ansprüche 1 bis 4, das ferner Folgendes umfasst:
Erfassen (601) einer aktuellen Umgebungshelligkeit;
Abfragen (602) von vorab festgelegten Hautkorrekturinformationen basierend auf der aktuellen Umgebungshelligkeit zum Erfassen eines Hautkompensationskoeffizienten; und
Korrigieren (603) einer Haut auf dem 3D-Gesicht entsprechend dem Hautkompensationskoeffizienten.

6. Vorrichtung zur Erfassung eines dreidimensionalen (3D) Gesichts eines Benutzers, die Folgendes umfasst:
ein Erzeugungsmodul (80), ausgelegt zum Erfassen von mehreren zweidimensionalen (2D) Gesichtsbildern des Benutzers, aufgenommen aus mehreren Winkeln, und Fusionieren der mehreren 2D-Gesichtsbilder zum Erzeugen einer Hauttexturkarte;
ein Detektiermodul (10) ausgelegt zum Detektieren eines zweidimensionalen (2D) Gesichtsbilds, aufgenommen von einer Vorderseite zum Erfassen, durch eine Bilderkennungstechnologie, von 2D-Gesichtsmerkmalspunkten, wobei das von der Vorderseite aufgenommene Gesichtsbild aus den mehreren 2D-Gesichtsbildern, die aus den mehreren Winkeln aufgenommen werden, ausgewählt wird;
**gekennzeichnet durch**:
ein Abgleichmodul (20), ausgelegt zum Abgleichen der 2D-Gesichtsmerkmalspunkte mit Gesichtsmerkmalspunkten eines vorab gespeicherten 3D-Gesichtsmodells, wobei, wenn Abstände und Positionsbeziehungen unter den 2D-Gesichtsmerkmalspunkten mit Abständen und einer Positionsbeziehung unter den Gesichtsmerkmalspunkten des vorab gespeicherten 3D-Gesichtsmodells abgeglichen werden, die 2D-Gesichtsmerkmalspunkte mit den Gesichtsmerkmalspunkten des vorab gespeicherten 3D-Gesichtsmodells übereinstimmen;
ein Darstellungsmodul (30), ausgelegt zum, in Reaktion darauf, dass die 2D-Gesichtsmerkmalspunkte mit den Gesichtsmerkmalspunkten des vorab gespeicherten 3D-Gesichtsmodells übereinstimmen, Darstellen des vorab gespeicherten 3D-Gesichtsmodells mit der Hauttexturkarte zum Erfassen eines neuen 3D-Gesichts;
ein erstes Erfassungsmodul (40), ausgelegt zum, in Reaktion darauf, dass die 2D-Gesichtsmerkmalspunkte nicht mit den Gesichtsmerkmalspunkten des vorab gespeicherten 3D-Gesichtsmodells übereinstimmen, Erfassen von Tiefeninformationen des Gesichts des Benutzers;
ein Modellierungsmodul (50), ausgelegt zum Durchführen von 3D-Rekonstruktion basierend auf den Tiefeninformationen und den mehreren 2D-Gesichtsbildern, zum Erfassen eines rekonstruierten 3D-Gesichtsmodells; und
wobei das Darstellungsmodul (30) ferner ausgelegt ist zum Darstellen des rekonstruierten 3D-Gesichtsmodells mit der Hauttexturkarte zum Erfassen des 3D-Gesichts.

7. Vorrichtung nach Anspruch 6, wobei die mehreren 2D-Gesichtsbilder aus den mehreren Winkeln zusammengefügt werden, und wobei eine Größe eines Überlappungsbereichs zwischen zwei 2D-Gesichtsbildern, die miteinander zusammengefügt werden, innerhalb eines geeigneten Bereichs ist; und wobei die zusammengefügten 2D-Gesichtsbilder verarbeitet werden, um die Hauttexturkarte zu erzeugen.

8. Vorrichtung nach einem der Ansprüche 6 bis 7, die ferner Folgendes umfasst:
ein zweites Erfassungsmodul (60), ausgelegt zum Berechnen eines Übereinstimmungsgrads zwischen den 2D-Gesichtsmerkmalspunkten und den Gesichtsmerkmalspunkten des vorab gespeicherten 3D-Gesichtsmodells durch Berechnen eines Koordinatendifferenzwerts zwischen den 2D-Gesichtsmerkmalspunkten und den Gesichtsmerkmalspunkten des vorab gespeicherten 3D-Gesichtsmodells, Abfragen von vorab festgelegten Modellkorrekturinformationen basierend auf dem Übereinstimmungsgrad zum Erfassen eines Anpassungsparameters, wobei die vorab festgelegten Modellkorrekturinformationen Folgendes umfassen: einen Änderungsanpassungswert von Koordinatenpunkten der Gesichtsmerkmalspunkte, und wobei der Änderungsanpassungswert von Koordinatenpunkten der Gesichtsmerkmalspunkte als der Anpassungsparameter genommen wird; und
ein Anpassungsmodul (70), ausgelegt zum Anpassen des vorab gespeicherten 3D-Gesichtsmodells entsprechend dem Anpassungsparameter zum Anpassen des 3D-Gesichtsmodells, angepasst an die Hauttexturkarte, damit die Hauttexturkarte noch enger am 3D-Gesichtsmodell anhaftet, sodass das erzeugte 3D-Gesichtsmodell realistischer ist.

9. Vorrichtung nach einem der Ansprüche 6 bis 8, wobei das Darstellungsmodul (30) ausgelegt ist zum:
Berechnen einer Gesichtswinkeldifferenz zwischen jeweils zwei 2D-Gesichtsbildern in den mehreren 2D-Gesichtsbildern;
Vergleichen aller Gesichtswinkeldifferenzen mit einer vorab festgelegten ersten Winkelschwelle und einer vorab festgelegten zweiten Winkelschwelle, und Erfassen einer ersten Anzahl von Gesichtswinkeldifferenzen, die größer als oder gleich der zweiten Winkelschwelle sind, und Erfassen einer zweiten Anzahl von Gesichtswinkeldifferenzen, die größer als oder gleich einer ersten Winkelschwelle und kleiner als die zweite Winkelschwelle sind;
in Reaktion darauf, dass die erste Anzahl größer als oder gleich der zweiten Anzahl ist, Segmentieren der Hauttexturkarte entsprechend einem vorab festgelegten ersten Einheitsbereich zum Erfassen von segmentierten Hauttexturbereichen und Anheften der segmentierten Hauttexturbereiche an entsprechende Bereiche des 3D-Gesichtsmodells; und
in Reaktion darauf, dass die zweite Anzahl größer als die erste Anzahl ist, Segmentieren der Hauttexturkarte entsprechend einem vorab festgelegten zweiten Einheitsbereich zum Erfassen von segmentierten Hauttexturbereichen und Anheften der segmentierten Hauttexturbereiche an entsprechende Bereiche des 3D-Gesichtsmodells, wobei der zweite Einheitsbereich kleiner als der erste Einheitsbereich ist.

10. Vorrichtung nach einem der Ansprüche 6 bis 9, die ferner Folgendes umfasst:
ein Kompensationsmodul (90), ausgelegt zum Erfassen einer aktuellen Umgebungshelligkeit, Abfragen von vorab festgelegten Hautkorrekturinformationen basierend auf der aktuellen Umgebungshelligkeit zum Erfassen eines Hautkompensationskoeffizienten, und Korrigieren einer Haut auf dem 3D-Gesicht entsprechend dem Hautkompensationskoeffizienten.

11. Computerlesbares Speichermedium mit einem darauf gespeicherten Computerprogramm, wobei das Computerprogramm eine elektronische Vorrichtung veranlasst, das Verfahren zur Erfassung eines dreidimensionalen (3D) Gesichts nach einem der Ansprüche 1 bis 5 auszuführen.

## Revendications

1. Procédé pour acquérir un visage tridimensionnel (3D) d'un utilisateur, comprenant :
l'acquisition (101) d'une pluralité d'images de visage bidimensionnel (2D) de l'utilisateur, capturées depuis une pluralité d'angles ;
la génération (101) d'une carte de texture de peau en fusionnant la pluralité d'images de visage 2D ;
la détection (102) d'une image de visage bidimensionnel (2D) capturée depuis un côté avant, par le biais d'une technologie de reconnaissance d'image, pour acquérir des points de caractéristiques faciales 2D, dans lequel l'image de visage capturée depuis le côté avant est sélectionnée à partir de la pluralité d'images de visage 2D capturées depuis la pluralité d'angles ;
**caractérisé par** :
l'assortiment (102) des points de caractéristiques faciales 2D à des points de caractéristiques faciales d'un modèle de visage 3D pré-stocké, dans lequel, lorsque des distances et une relation positionnelle parmi les points de caractéristiques faciales 2D sont assorties à des distances et une relation positionnelle parmi les points de caractéristiques faciales du modèle de visage 3D pré-stocké, les points de caractéristiques faciales 2D sont assortis aux points de caractéristiques faciales du modèle de visage 3D pré-stocké ;
en réponse (102) au fait que les points de caractéristiques faciales 2D sont assortis aux points de caractéristiques faciales du modèle de visage 3D pré-stocké, le rendu du modèle de visage 3D pré-stocké avec la carte de texture de peau pour acquérir un nouveau visage 3D ;
en réponse (201) au fait que les points de caractéristiques faciales 2D ne sont pas assortis aux points de caractéristiques faciales du modèle de visage 3D pré-stocké, l'acquisition (201) d'informations de profondeur du visage de l'utilisateur ; et
la réalisation (202) d'une reconstruction 3D, sur la base des informations de profondeur et de la pluralité d'images de visage 2D, pour acquérir un modèle de visage 3D reconstruit ; et
le rendu (203) du modèle de visage 3D reconstruit avec la carte de texture de peau pour acquérir le visage 3D.

2. Procédé selon la revendication 1, dans lequel la pluralité d'images de visage 2D depuis la pluralité d'angles sont assemblées les unes avec les autres, et une taille d'une surface de chevauchement entre deux images de visage 2D qui sont assemblées l'une avec l'autre est au sein d'une plage correcte ; et les images de visage 2D assemblées sont traitées pour générer la carte de texture de peau.

3. Procédé selon l'une quelconque des revendications 1 et 2, comprenant en outre :
le calcul (401) d'un degré d'assortiment entre les points de caractéristiques faciales 2D et les points de caractéristiques faciales du modèle de visage 3D pré-stocké, comprenant : le calcul d'une valeur de différence de coordonnées entre les points de caractéristiques faciales 2D et les points de caractéristiques faciales du modèle de visage 3D pré-stocké ;
l'interrogation (402) d'informations de correction de modèle prédéfinies, sur la base du degré d'assortiment, pour acquérir un paramètre d'ajustement, dans lequel les informations de correction de modèle prédéfinies comprennent : une valeur d'ajustement de changement de points de coordonnées des points de caractéristiques faciales, et la valeur d'ajustement de changement de points de coordonnées des points de caractéristiques faciales est utilisée en tant que paramètre d'ajustement ; et
l'ajustement (403) du modèle de visage 3D pré-stocké selon le paramètre d'ajustement, pour ajuster le modèle de visage 3D de façon adaptative à la carte de texture de peau pour faire en sorte que la carte de texture de peau s'applique de plus près au modèle de visage 3D, de telle sorte que le modèle de visage 3D généré soit plus réaliste.

4. Procédé selon l'une quelconque des revendications 1 à 3, dans lequel le rendu du modèle de visage 3D pré-stocké avec la carte de texture de peau pour acquérir le visage 3D comprend :
le calcul (501) d'une différence d'angle de visage entre chaque paire d'image de visage 2D dans la pluralité d'images de visage 2D ;
la comparaison (502) de toutes les différences d'angle de visage à un premier seuil d'angle prédéfini et un second seuil d'angle prédéfini, et l'acquisition (502) d'un premier nombre de différences d'angle de visage supérieur ou égal au second seuil d'angle, et l'acquisition (502) d'un second nombre de différences d'angle de visage supérieur ou égal au premier seuil d'angle et inférieur au second seuil d'angle ;
en réponse au fait que le premier nombre est supérieur ou égal au second nombre, la segmentation (503) de la carte de texture de peau selon une première surface unitaire prédéfinie pour acquérir des surfaces de texture de peau segmentées, et l'application (503) des surfaces de texture de peau segmentées à des surfaces correspondantes du modèle de visage 3D ; et
en réponse au fait que le second nombre est supérieur au premier nombre, la segmentation (504) de la carte de texture de peau selon une seconde surface unitaire prédéfinie pour acquérir des surfaces de texture de peau segmentées, et l'application (504) des surfaces de texture de peau segmentées à des surfaces correspondantes du modèle de visage 3D, la seconde surface unitaire étant inférieure à la première surface unitaire.

5. Procédé selon l'une quelconque des revendications 1 à 4, comprenant en outre :
l'acquisition (601) d'une luminosité ambiante actuelle ;
l'interrogation (602) d'informations de correction de peau prédéfinies, sur la base de la luminosité ambiante actuelle, pour acquérir un coefficient de compensation de peau ; et
la correction (603) d'une peau sur le visage 3D selon le coefficient de compensation de peau.

6. Dispositif pour acquérir un visage tridimensionnel (3D) d'un utilisateur, comprenant :
un module de génération (80) configuré pour acquérir une pluralité d'images de visage bidimensionnel (2D) de l'utilisateur, capturées depuis une pluralité d'angles, et fusionner la pluralité d'images de visage 2D pour générer une carte de texture de peau ;
un module de détection (10) configuré pour détecter une image de visage bidimensionnel (2D), capturée depuis un côté avant pour, par le biais d'une technologie de reconnaissance d'image, acquérir des points de caractéristiques faciales 2D, dans lequel l'image de visage capturée depuis le côté avant est sélectionnée à partir de la pluralité d'images de visage 2D capturées depuis la pluralité d'angles ;
**caractérisé par** :
un module d'assortiment (20) configuré pour assortir les points de caractéristiques faciales 2D à des points de caractéristiques faciales d'un modèle de visage 3D pré-stocké, dans lequel, lorsque des distances et une relation positionnelle parmi les points de caractéristiques faciales 2D sont assorties à des distances et une relation positionnelle parmi les points de caractéristiques faciales du modèle de visage 3D pré-stocké, les points de caractéristiques faciales 2D sont assortis aux points de caractéristiques faciales du modèle de visage 3D pré-stocké ;
un module de rendu (30) configuré pour, en réponse au fait que les points de caractéristiques faciales 2D sont assortis aux points de caractéristiques faciales du modèle de visage 3D pré-stocké, rendre le modèle de visage 3D pré-stocké avec la carte de texture de peau pour acquérir un nouveau visage 3D ;
un premier module d'acquisition (40), configuré pour, en réponse au fait que les points de caractéristiques faciales 2D ne sont pas assortis aux points de caractéristiques faciales du modèle de visage 3D pré-stocké, acquérir des informations de profondeur du visage de l'utilisateur ;
un module de modélisation (50) configuré pour réaliser une reconstruction 3D, sur la base des informations de profondeur et la pluralité d'images de visage 2D, pour acquérir un modèle de visage 3D reconstruit ; et
dans lequel le module de rendu (30) est en outre configuré pour rendre le modèle de visage 3D reconstruit avec la carte de texture de peau pour acquérir le visage 3D.

7. Dispositif selon la revendication 6, dans lequel la pluralité d'images de visage 2D depuis la pluralité d'angles sont assemblées les unes avec les autres, et une taille d'une surface de chevauchement entre deux images de visage 2D qui sont assemblées l'une avec l'autre est au sein d'une plage correcte ; et les images de visage 2D assemblées sont traitées pour générer la carte de texture de peau.

8. Dispositif selon l'une quelconque des revendications 6 et 7, comprenant en outre :
un second module d'acquisition (60) configuré pour calculer un degré d'assortiment entre les points de caractéristiques faciales 2D et les points de caractéristiques faciales du modèle de visage 3D pré-stocké par le biais du calcul d'une valeur de différence de coordonnées entre les points de caractéristiques faciales 2D et les points de caractéristiques faciales du modèle de visage 3D pré-stocké, interroger des informations de correction de modèle prédéfinies, sur la base du degré d'assortiment, pour acquérir un paramètre d'ajustement, dans lequel les informations de correction de modèle prédéfinies comprennent : une valeur d'ajustement de changement de points de coordonnées des points de caractéristiques faciales, et la valeur d'ajustement de changement de points de coordonnées des points de caractéristiques faciales est utilisée en tant que paramètre d'ajustement ; et
un module d'ajustement (70) configuré pour ajuster le modèle de visage 3D pré-stocké selon le paramètre d'ajustement, pour ajuster le modèle de visage 3D de façon adaptative à la carte de texture de peau pour faire en sorte que la carte de texture de peau s'applique de plus près au modèle de visage 3D, de telle sorte que le modèle de visage 3D généré soit plus réaliste.

9. Dispositif selon l'une quelconque des revendications 6 à 8, dans lequel le module de rendu (30) est configuré pour :
calculer une différence d'angle de visage entre chaque paire d'image de visage 2D dans la pluralité d'images de visage 2D ;
comparer toutes les différences d'angle de visage à un premier seuil d'angle prédéfini et un second seuil d'angle prédéfini, et acquérir un premier nombre de différences d'angle de visage supérieur ou égal au second seuil d'angle, et acquérir un second nombre de différences d'angle de visage supérieur ou égal au premier seuil d'angle et inférieur au second seuil d'angle ;
en réponse au fait que le premier nombre est supérieur ou égal au second nombre, segmenter la carte de texture de peau selon une première surface unitaire prédéfinie pour acquérir des surfaces de texture de peau segmentées, et appliquer les surfaces de texture de peau segmentées à des surfaces correspondantes du modèle de visage 3D ; et
en réponse au fait que le second nombre est supérieur au premier nombre, segmenter la carte de texture de peau selon une seconde surface unitaire prédéfinie pour acquérir des surfaces de texture de peau segmentées, et appliquer les surfaces de texture de peau segmentées à des surfaces correspondantes du modèle de visage 3D, la seconde surface unitaire étant inférieure à la première surface unitaire.

10. Dispositif selon l'une quelconque des revendications 6 à 9, comprenant en outre :
un module de compensation (90) configuré pour acquérir une luminosité ambiante actuelle, interroger des informations de correction de peau prédéfinies, sur la base de la luminosité ambiante actuelle, pour acquérir un coefficient de compensation de peau, et corriger une peau sur le visage 3D selon le coefficient de compensation de peau.

11. Support de stockage lisible par ordinateur ayant un programme d'ordinateur stocké sur celui-ci, dans lequel le programme d'ordinateurs fait en sorte qu'un dispositif électronique réalise le procédé pour acquérir un visage tridimensionnel (3D) d'une quelconque des revendications 1 à 5.
